# EUROPEAN PATENT APPLICATION

(11) **EP 2 065 805 A1**
(43) Date of publication of application: **03.06.2009**
(21) Application number: 08166119.1
(22) Date of filing: 08.10.2008
(51) Int. Cl.: G06F 9/50

(54) **Secured live software migration**

(30) Priority: 21.11.2007 US 944354
(71) Applicant: SafeNet, Inc., Belcamp, MD 21017 (US)
(72) Inventor: Paul, Prabir, Santa Clara, CA 95051 (US); Vempati, Anil, Sunnyvale, CA 94087 (US)
(74) Representative: Jones, Keith William

(57) **Abstract**

A novel approach is introduced for secured live migration of a software component currently running on one hosting device to another hosting device. One or more pages of the software component are encrypted before migration of the software component, and are later decrypted after the migration is complete. The software component is kept operational during the encryption, migration, and decryption of the software component. The one or more pages to be encrypted and decrypted can be selected based on data sensitivity and/or other criteria.

## Description

### BACKGROUND

A software component running on a hosting machine may sometimes need to be migrated to another hosting machine in order to balance load on available physical (computing and memory) resources on the two hosting machines. Such migration of the software component from one physical machine to another is necessary when the load on the first host becomes so great that the software component cannot get enough computing and memory resource needed to operate properly, while the second host is relatively idle and has ample resource to accommodate the operational demand of the software component.

Increasingly, the migration of a software component is performed "live." Unlike classical software migration that requires shutting down the software component before migration and restarting the software afterwards, live migration keeps the running software component operational with zero down time during the migration process, wherein the migration process is transparent and invisible to the users of the software component.

Live migration of a software component involves copying memory resources in addition to disk resources currently occupied by the running software component from one host to another. Since these occupied storage resources can contain sensitive information/data of the software component, data security issue during the migration must be properly addressed.

### SUMMARY

A novel approach is introduced for secured live migration of a software component currently running on one hosting device to another hosting device. One or more pages of the software component are encrypted before migration of the software component, and are later decrypted after the migration is complete. The software component is kept operational during the encryption, migration, and decryption of the software component. The one or more pages to be encrypted and decrypted can be selected based on data sensitivity and/or other criteria.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. These and other advantages of the present invention will become apparent to those skilled in the art upon a reading of the following descriptions and a study of the several figures of the drawings.

### BRIEF DESCRIPTION OF THE DRAWINGS

**FIG. 1** depicts an example of a system to support secured live migration of software.

**FIG. 2** depicts an example of the secured live migration engine.

**FIG. 3** depicts a flowchart of an exemplary process to support secured live migration of software.

**FIG. 4** depicts an example of a system to support secured live virtual machine migration.

### DETAILED DESCRIPTION OF EMBODIMENTS

The approach is illustrated by way of example and not by way of limitation in the figures of the accompanying drawings in which like references indicate similar elements. It should be noted that references to "an" or "one" or "some" embodiment(s) in this disclosure are not necessarily to the same embodiment, and such references mean at least one.

Although the diagrams depict components as functionally separate, such depiction is merely for illustrative purposes. It will be apparent to those skilled in the art that the components portrayed in this figure can be arbitrarily combined or divided into separate software, firmware and/or hardware components. Furthermore, it will also be apparent to those skilled in the art that such components, regardless of how they are combined or divided, can execute on the same computing device or multiple computing devices, and wherein the multiple computing devices can be connected by one or more networks.

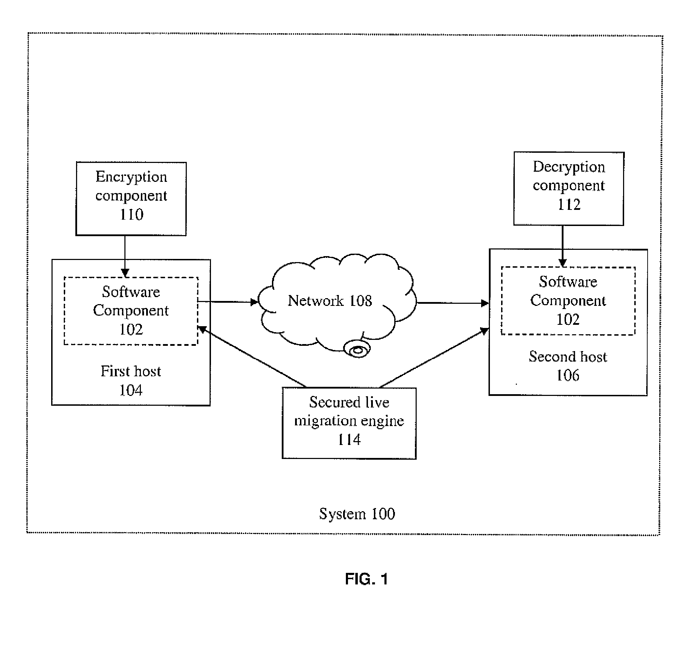

**FIG. 1** depicts an example of a system **100** to support secured live migration of software. In the example of FIG. 1, the system 100 includes a software component **102**, a first host **104**, a second host **106**, a network **108**, an encryption component **110**, a decryption component **112**, and a secured live migration engine **114**.

In the example of FIG. 1, the software component 102 can be an (operating) system software, an application software, or a (software) execution environment that is operable to run on a physical host (machine). For non-limiting examples, the software component can be a part of or operable under Windows®, SUN-OS, UNIX, or Linux operating systems and their associated file management systems.

In the example of FIG. 1, the first host 104 and the second host 106 can each be a computing device, a communication device, or any electronic device that contains at least a processor and a volatile memory, such as DRAM or SRAM, and/or a nonvolatile memory, such as magnetic or optical storage (not shown) and is capable of running the software component 102. For non-limiting examples, a computing device can be but is not limited to, a laptop PC, an iPod, a desktop PC, a tablet PC, a PDA, and a server machine. A communication device can be a mobile phone.

In the example of FIG. 1, the network 108 can be a communication network based on certain communication protocols, such as TCP/IP protocol. Such network can be but is not limited to, internet, intranet, wide area network (WAN), local area network (LAN), wireless network, Bluetooth, and mobile communication network. The physical connections of the network and the communication protocols are well known to those of skill in the art.

In the example of FIG. 1, the encryption component 110 is a software component, which while in operation on a host, is capable of encrypting one or more pages and/or blocks of the software component 102 so that an unauthorized party will not be able to extract the sensitive data or content contained in the pages or blocks even if the party has access to the pages or blocks. Here, a page is a fixed length block of instructions, data, or both, of the software component 102 that is used as a transfer unit of either volatile or non-volatile storage resource between memories of one host and another host.

In the example of FIG. 1, the decryption component 112 is a software component, which while in operation on a host, is capable of decrypting the one or more pages and/or blocks of the software component 102 that have been encrypted for data security purposes. Once decrypted, the sensitive data or content contained in the pages or blocks can be extracted by an authorized party.

In the example of FIG. 1, the secured live migration engine 114 is operable to perform at least two major operations: migrating the software component 102 live from one host to another, and securing the migration of the software component 102 by encrypting before and decrypting after the migration pages or blocks of the software component via the encryption component 110 and decryption component 112, respectively. The term "engine," as used herein, generally refers to any combination of software, firmware, hardware, or other component that is used to effectuate a purpose.

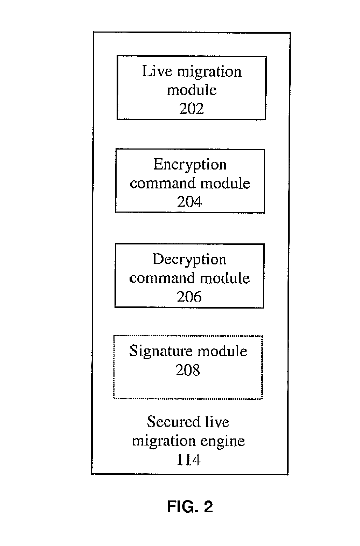

**FIG. 2** depicts an example of the secured live migration engine 114, which includes at least a live migration module **202**, an encryption command module **204**, a decryption command module **206**, and optionally a signature module **208**.

In the example of FIG. 2, the live migration module 202 is operable to migrate the software component 102 live from the host it is running on to another host. As part of the migration process, every page of the running software component, either in volatile or non-volatile memory storage space of the current host, is copied over to the corresponding volatile or non-volatile memory storage space of another host. Since the software component is kept operational during the migration process, the migration is transparent to the user of the software component.

In the example of FIG. 2, the encryption command module 204 is capable of utilizing the encryption component 110 to encrypt every page or block of the software component 102 running on a host before migrating it to another host. When the number of pages of the software component to be migrated is huge, data security can also be selectively enforced at various levels. More specifically, instead of encrypting the whole software component being migrated, the encryption command module 204 is operable to encrypt only those pages of the software component that contain sensitive data or information. Such sensitive information, for non-limiting examples, may include sensitive or confidential user data, and/or security information necessary to access the data, such as encrypting or decrypting keys. Alternatively, the encryption command module 204 is operable to select the one or more pages of the software component 102 to be encrypted based on one or more of: address range of the pages, content, and owner of the software component. The portion (pages) of the software component that is not selected will be skipped for encryption. Herein, the skipped portion of the software component may include portions of the software component that do not contain or deal with sensitive data, such as an installed driver and/or an application not dealing with sensitive data of the software component.

In the example of FIG. 2, the decryption command module 206 is capable of utilizing the decryption component 112 to decrypt every previously encrypted page or block of the software component 102 after the software component has been migrated from one host or another. Since pages of the software component may have been selectively encrypted as discussed above, the decryption command module 306 will first identify the pages that have been encrypted, and then initiate the decryption process via the decryption component focusing on those encrypted pages of the software component only.

In the example of FIG. 2, the signature module 208 is operable to sign, for data integrity purposes, one or more pages or blocks of the software component 102 running on a host before migrating the software component to another host. Here, like the skipped portion of the software component 102, the content of the signed pages does not necessarily need to be encrypted anymore. These signed pages can then be sign-verified after the software component is migrated to another host to make sure they have not been tampered with during the migration.

While the system 100 depicted in FIG. 1 is in operation, the software component 102 is currently running on the first host 104. Before migrating the software component 102 live from the first host 104 to the second host 106, the secured live migration engine 114 may first selectively encrypt one or more pages of the software component either in volatile or non-volatile memory of the first host 104 via the encryption component 110. Once the software component 102 is migrated live from the first host to the second host over the network 108, the decryption component 112 can be utilized by the secured live migration engine to decrypt the one or more encrypted pages of the software component now running on the second host 106. For live migration, the secured live migration engine keeps the software component 102 operational during the encrypting, migrating, and decrypting process.

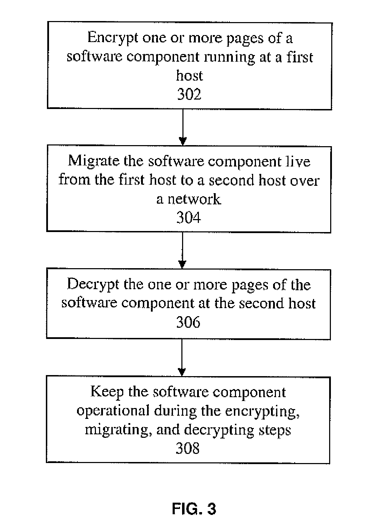

**FIG. 3** depicts a flowchart of an example of a process to support secured live migration of software. Although this figure depicts functional steps in a particular order for purposes of illustration, the process is not limited to any particular order or arrangement of steps. One skilled in the art will appreciate that the various steps portrayed in this figure could be omitted, rearranged, combined and/or adapted in various ways.

In the example of FIG. 3, the flowchart **300** starts at block **302** where one or more pages of a software component running at a first host can be encrypted before the software component is migrated to a second host. The encryption process herein is performed by an encryption module at the instruction of a secured live migration engine, which selects the one or more pages of the software component, either in volatile or non-volatile memory storage of the first host, to be encrypted before migration of the software component.

The flowchart 300 continues to block **304** where, once encrypted, the software component can be migrated live from the first host to the second host over a network. Such live migration process involves copying every page of the software component, either in volatile or non-volatile memory storage of the first host, to the corresponding storage space of the second host, while keeping the software component operational.

The flowchart 300 continues to block **306** where the one or more encrypted pages of the software component can be decrypted. The decryption process herein is performed by a decryption module at the instruction of the secured live migration engine, which first identifies the pages that have been encrypted before migration, as not every page of the software component has been selected for encryption by the secured live migration engine.

The flowchart 300 ends at block **308** where the software component is kept operational at all times and thus the migration process is kept live during the encrypting, migrating, and decrypting blocks above. Such live migration of the software component is transparent to the user of the software component, enabling uninterrupted usage of the software component by the client.

### Secured live migration of virtual machines

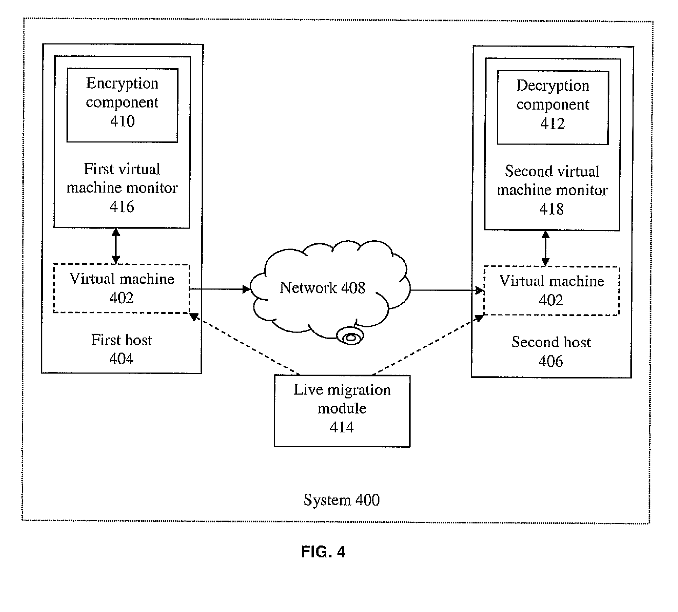

**FIG. 4** depicts an example of a system **400** to support secured live virtual machine migration. In the example of FIG. 4, the system 400 includes a virtual machine **402**, a first host **404**, a second host **406**, a network **408**, an encryption component **410**, a decryption component **412**, a secured live migration engine **114**, a first virtual machine monitor **416**, and a second virtual machine monitor **418**.

In the example of FIG. 4, the virtual machine 402 is a virtualized software executing environment that enables a user to run software on an abstract machine on a host under an operating system such as a Window®, SUN-OS, UNIX, or Linux operating system and its associated file management system. Traditionally, the computing environment on a host follows the "One App, One Box" model, where one operating system together with one application server composed of multiple threads and processes is tied to a single physical host. Such model leads to higher costs because each host requires maintenance and software licenses, and less flexibility because the application load is not matched to the server's capacity, causing over/under utilization. Under a virtualized environment, known as virtualization, in contrast, follows the "Multiple App, One Box" model under which a number of virtual machines can run on a single host, each of which runs an operating system in its own discrete execution environment. The virtualization environment provides multiple users the illusion of each having an entire "private" (virtual) machine all to him/herself alone isolated from other users, while all users share the a single physical host. Another advantage of virtualization is that booting and restarting a virtual machine can be much faster than with a physical machine, since it may be possible to skip tasks such as hardware initialization.

In the example of FIG. 4, a virtual machine monitor, also referred to as a hypervisor, monitors and/or manages operations of one or more virtual machines running on a host in a virtualization environment. The virtual machine monitor herein can be but is not limited to VMWare, Xen, or other virtualization product. Each of the first virtual machine monitor 416 and the second virtual machine monitor 418 is a virtualization platform that enables and manages multiple virtual machines (and their operating systems) to run on the first host 404 and second host 406 respectively at the same time.

In the example of FIG. 4, the encryption component 410 and/or the decryption component 412 can either be stand-alone software components operable to encrypt or decrypt pages of virtual machine 402 respectively, or plugged-ins to the virtual machine monitors 416 and 418 running on the first and/or the second host, respectively.

While the system 400 depicted in FIG. 4 is in operation, a virtual machine 402 is currently running at a first host 402. Before migrating the virtual machine 402 live from the first host 402 to a second host 406, a secured live migration engine 414 may selectively encrypt one or more pages of image of the virtual machine 402 either in volatile or non-volatile memory of the first host 404 via an encryption component 410 embedded in the first virtual machine monitor 416. Once the virtual machine is migrated live from the first host to the second host over the network 408, the decryption component 412 can be utilized by the secured live migration engine to decrypt the one or more encrypted pages of image of the virtual machine 402 now running at the second host. For live migration, the secured live migration engine keeps the virtual machine 402 operational during the encrypting, migrating, and decrypting process. The live migration of the virtual machine 402 from the first host 404 to the second host 406 while the machine is operational is referred to as "Live Migration" or "VMotion."

One embodiment may be implemented using a conventional general purpose or a specialized digital computer or microprocessor(s) programmed according to the teachings of the present disclosure, as will be apparent to those skilled in the computer art. Appropriate software coding can readily be prepared by skilled programmers based on the teachings of the present disclosure, as will be apparent to those skilled in the software art. The invention may also be implemented by the preparation of integrated circuits or by interconnecting an appropriate network of conventional component circuits, as will be readily apparent to those skilled in the art.

One embodiment includes a computer program product which is a machine readable medium (media) having instructions stored thereon/in which can be used to program one or more hosts to perform any of the features presented herein. The machine readable medium can include, but is not limited to, one or more types of disks including floppy disks, optical discs, DVD, CD-ROMs, micro drive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. Stored on any one of the computer readable medium (media), the present invention includes software for controlling both the hardware of the general purpose/specialized computer or microprocessor, and for enabling the computer or microprocessor to interact with a human viewer or other mechanism utilizing the results of the present invention. Such software may include, but is not limited to, device drivers, operating systems, execution environments/containers, and applications.

The foregoing description of various embodiments of the claimed subject matter has been provided for the purposes of illustration and description. It is not intended to be exhaustive or to limit the claimed subject matter to the precise forms disclosed. Many modifications and variations will be apparent to the practitioner skilled in the art. Particularly, while the concept "component" is used in the embodiments of the systems and methods described above, it will be evident that such concept can be interchangeably used with equivalent concepts such as, class, method, type, interface, module, object model, and other suitable concepts. Embodiments were chosen and described in order to best describe the principles of the invention and its practical application, thereby enabling others skilled in the relevant art to understand the claimed subject matter, the various embodiments and with various modifications that are suited to the particular use contemplated.

## Claims

1. A system (100) to support secured live migration of software, comprising:
an encryption component (110) embodied in a machine readable medium;
a decryption component (112) embodied in a machine readable medium;
a software component (102) running at a first host (104);
a secured live migration engine (114) which, in operation:
encrypts one or more pages of the software component (102) running at the first host (104) via the encryption component (110);
migrates the software component (102) live from the first host (104) to a second host (106) over a network (108);
decrypts the one or more encrypted pages of the software component (102) at the second host (106) via the decryption component (112);
keeps the software component (102) operational during the encrypting, migrating, and decrypting steps.

2. The system (100) of claim 1, wherein:
the first or second host (104, 106) is one of: a laptop PC, a desktop PC, a tablet PC, a PDA, an iPod, a server machine, a mobile phone, and any electronic device capable of running the software component (102).

3. The system (100) of claim 1 or claim 2, wherein:
the network (108) is one of: TCP/IP network, internet, intranet, WAN, LAN, wireless network, Bluetooth, and mobile communication network.

4. The system (100) of any of claims 1 to 3, wherein:
the secured live migration engine (114) migrates the software component (102) to balance load on available physical resources on the first and the second host (104, 106).

5. The system (100) of any of claims 1 to 4, wherein:
the secured live migration engine (114) encrypts and decrypts every page of the software component (102).

6. The system (100) of any of claims 1 to 4, wherein:
the secured live migration engine (114) encrypts and decrypts only the one or more pages of the software component (102) containing sensitive information.

7. The system (100) of claim 6, wherein:
the sensitive information includes sensitive user data and/or one or more cryptographic keys to access the data.

8. The system (100) of any of claims 1 to 4, wherein:
the secured live migration engine (114) selects the one or more pages of the software component (102) to be encrypted and decrypted and skips a portion of the software component (102) for encryption and decryption based on one or more of: address range of the one or more pages, content, and owner of the software component.

9. The system (100) of claim 8, wherein:
the skipped portion includes an installed driver and/or an application not containing or dealing with sensitive data of the software component (102).

10. The system (100) of any preceding claim, wherein:
the secured live migration engine (114) which, in operation:
signs one or more pages of the software component running (102) on the first host (104) before migrating the software component (102) to the second host (106);
verifies the signed one or more pages of the software component (102) after migrating the software component (102) to the second host (106).

11. A method to support secured live migration of software, comprising:
encrypting one or more pages of a software component (102) running at a first host (104);
migrating the software component (102) live from the first host (104) to a second host (106) over a network (108);
decrypting the one or more encrypted pages of the software component (102) at the second host (106);
keeping the software component (102) operational during the encrypting, migrating, and decrypting steps.

12. The method of claim 11, further comprising:
migrating the software component (102) to balance load on available physical resources on the first and the second host (104, 106).

13. The method of claim 11 or claim 12, further comprising:
monitoring and/or managing operation of the software component (102) on the first and the second hosts (104, 106), respectively.

14. The method of claim any of claims 11 to 13, further comprising:
encrypting and decrypting every page of the software component (102).

15. The method of any of claims 11 to 13, further comprising:
encrypting and decrypting only the one or more pages of the software component (102) containing sensitive information.

16. The method of any of claims 11 to 13, further comprising:
selecting the one or more pages of the software component (102) to be encrypted and decrypted based on one or more of: address range, content, and owner of the software component.

17. The method of any of claims 11 to 16, further comprising:
signing one or more pages of the software component (102) running on the first host (104) before migrating the software component (102) to the second host (106);
verifying the signed one or more pages of the software component (102) after migrating the software component (102) to the second host (106).

18. A system (400) to support secured live migration of virtual machine, comprising:
an encryption component (400) plugged-in on a first virtual machine monitor (416) operating on a first host (404);
a decryption component (412) plugged-in on a second virtual machine monitor (418) operating on a second host (406).
a virtual machine (402) running at the first host (404);
a live secured live migration engine (414) which, in operation:
encrypts one or more pages of image of the virtual machine (402) running at the first host (404) via the encryption component (410);
migrates the virtual machine (402) live from the first host (404) to a second host (406) over a network (408);
decrypts the one or more encrypted pages of the image of the virtual machine (402) at the second host (406) via the decryption component (412);
keeps the virtual machine (402) operational during the encrypting, migrating, and decrypting steps.

19. The system (400) of claim 18, wherein:
the first or second virtual machine monitor (416, 418) is VMWare, Xen, or other virtualization product.

20. The system (400) of claim 18 or claim 19, wherein:
the first and the second virtual machine monitors (416, 418) monitor and/or manage the virtual machine's operation on the first and the second hosts (404, 406), respectively.

21. A method to support secured live migration of virtual machine (402), comprising:
encrypting one or more pages of image of a virtual machine (402) running at a first host (404);
migrating the virtual machine (402) live from the first host (404) to a second host (406) over a network (408);
decrypting the one or more encrypted pages of the image of the virtual machine (402) at the second host (406);
keeping the virtual machine (402) operational during the encrypting, migrating, and decrypting steps.

22. A system (100) to support secured live migration of software, comprising:
Means (110) for encrypting one or more pages of the software component (102) running at the first host (104) before migration of the software component (102);
means for migrating the software component (102) live from the first host (104) to a second host (106) over a network;
means (112) for decrypting the one or more encrypted pages of the software component (102) at the second host (106) after migration of the software component (102);
means (114) for keeping the software component (102) operational and/or the migration transparent to a user of the software component (102) during the encrypting, migrating, and decrypting steps.
